(19) Europäisches Patentamt
European Patent Office
Office européen des brevets

(11) **EP 4 632 212 A1**

(12) **EUROPEAN PATENT APPLICATION**

(43) Date of publication:
**15.10.2025 Bulletin 2025/42**

(21) Application number: **25167571.6**

(22) Date of filing: **31.03.2025**

(51) International Patent Classification (IPC):
**F02K 1/76** (2006.01)    **F16D 65/00** (2006.01)
**F16D 65/02** (2006.01)    **F16H 25/24** (2006.01)
**F16H 35/00** (2006.01)

(52) Cooperative Patent Classification (CPC):
**B64D 29/06; F02K 1/763; F16D 65/00;
F16D 65/028; F16H 25/2454; F16H 35/00;**
F16H 2035/005

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.04.2024 IN 202411027105**

(71) Applicant: **Hamilton Sundstrand Corporation
Charlotte, NC 28217-4578 (US)**

(72) Inventor: **PANDIAN, Navaneetha
560037 Bangalore (IN)**

(74) Representative: **Dehns
10 Old Bailey
London EC4M 7NG (GB)**

(54) **ACTUATOR WITH BACK-TO-BACK CLUTCH AND A NO-BACK UNIT FOR AN ENGINE NACELLE AND A METHOD OF ASSEMBLING AN ENGINE NACELLE COMPRISING THE SAME**

(57) An electro-mechanical actuator architecture is provided for a cowl door (102) of an aircraft engine nacelle. The electro-mechanical actuator architecture includes a screw shaft (110), a drive disc (120) connected to the screw shaft, a clutch (130) disposed on a first side of the drive disc, the clutch including a first friction disc (131) with a first skew angle, and a no-back unit (140) disposed on a second side of the drive disc, which is opposite the first side, the no-back unit including a second friction disc (141) with a second skew angle, the first skew angle being higher than the second skew angle.

FIG. 2

EP 4 632 212 A1

**Description**

CROSS-REFERENCE TO RELATED APPLICATIONS

This application claims the benefit of India Patent Application No. 202411027105 filed April 1, 2024.

BACKGROUND

The present invention relates to aircraft and, more particularly, to an electro-mechanical actuator architecture.

In aeronautics, jet aircraft include fuselage with aerodynamic wings extending outwardly from either side of the fuselage. Engines, such as gas turbine engines, can be supported below the wings in nacelles. The nacelles each include outer casings with cowl doors that can be opened or closed for maintenance or inspection when the aircraft is grounded. The cowl doors can be opened and closed by specially designed actuators.

BRIEF DESCRIPTION

According to an aspect of the invention, an electro-mechanical actuator architecture is provided for a cowl door of an aircraft engine nacelle. The electro-mechanical actuator architecture includes a screw shaft, a drive disc connected to the screw shaft, a clutch disposed on a first side of the drive disc, the clutch including a first friction disc with a first skew angle, and a no-back unit disposed on a second side of the drive disc, which is opposite the first side, the no-back unit including a second friction disc with a second skew angle, the first skew angle being higher than the second skew angle.

In embodiments, the drive disc is splined to the screw shaft.

In embodiments, the no-back unit includes a no-back cage adjacent to the drive disc, a reaction plate adjacent to the no-back cage, a one-way clutch, and first and second needle bearings interposed between the reaction plate and the one-way clutch.

In embodiments, the first friction disc includes a clutch cage.

In embodiments, the first skew angle is greater than the second skew angle by about five degrees or more.

In embodiments, a minimum skew angle of the second skew angle is not less than about five degrees.

In embodiments, a maximum skew angle of the first skew angle is about fifty-five degrees.

According to an aspect of the invention, a method of assembling an engine nacelle is provided and includes a cowl door and an electro-mechanical actuator architecture for opening and closing the cowl door. The electro-mechanical actuator architecture includes a screw shaft connected to the cowl door, a drive disc connected to the screw shaft, a clutch disposed on a first side of the drive disc, the clutch including a first friction disc with a first skew angle, and a no-back unit disposed on a second side of the drive disc, which is opposite the first side, the no-back unit including a second friction disc with a second skew angle, the first skew angle being higher than the second skew angle.

In embodiments, the drive disc is splined to the screw shaft.

In embodiments, the no-back unit includes a no-back cage adjacent to the drive disc, a reaction plate adjacent to the no-back cage, a one-way clutch, and first and second needle bearings interposed between the reaction plate and the one-way clutch.

In embodiments, the first friction disc includes a clutch cage.

In embodiments, the first skew angle is greater than the second skew angle by about five degrees or more.

In embodiments, a minimum skew angle of the second skew angle is not less than about five degrees.

In embodiments, a maximum skew angle of the first skew angle is about fifty-five degrees.

In embodiments, the no-back unit does not resist cowl door extension and slips during cowl door retraction.

According to an aspect of the invention, a method of assembling an engine nacelle is provided. The method includes configuring an electro-mechanical actuator architecture to open and close a cowl door and connecting the electro-mechanical actuator architecture to the cowl door. The configuring of the electro-mechanical actuator architecture includes connecting a drive disc to a screw shaft, disposing, on a first side of the drive disc, a clutch including a first friction disc with a first skew angle, disposing, on a second side of the drive disc, which is opposite the first side, a no-back unit including a second friction disc with a second skew angle. The method further includes setting the first skew angle higher than the second skew angle.

In embodiments, the setting includes setting the first and second skew angles to tailor a maximum torque capability of the electro-mechanical actuator architecture.

In embodiments, the setting includes setting the first skew angle to be greater than the second skew angle by about five degrees or more.

In embodiments, the setting includes setting a minimum skew angle of the second skew angle to be not less than about five degrees.

In embodiments, the setting includes setting a maximum skew angle of the first skew angle to be about fifty-five degrees.

Additional features and advantages are realized through the techniques of the present invention. Other embodiments and aspects of the invention are described in detail herein and are considered a part of the claimed technical concept. For a better understanding of the invention with the advantages and the features, refer to the description and to the drawings.

BRIEF DESCRIPTION OF THE DRAWINGS

For a more complete understanding of this invention, reference is now made to the following brief description, taken in connection with the accompanying drawings and detailed description, wherein like reference numerals represent like parts:

FIG. 1 is an axial view of an engine nacelle of an aircraft with cowl doors in accordance with embodiments;

FIG. 2 is a side schematic view of an electro-mechanical actuator architecture for use with the cowl doors of FIG. 1 in accordance with embodiments;

FIG. 3 is a plan view of a friction disc of a clutch of the electro-mechanical actuator architecture of FIG. 2 in accordance with embodiments;

FIG. 4 is a plan view of a friction disc of a no-back unit of the electro-mechanical actuator architecture of FIG. 2 in accordance with embodiments;

FIG. 5 is a graphical illustration of an operation of the electro-mechanical actuator architecture of FIG. 2 in accordance with embodiments; and

FIG. 6 is a flow diagram illustrating a method of assembling an engine nacelle in accordance with embodiments.

DETAILED DESCRIPTION

Aircraft engine cowl doors are typically opened by hydraulic actuators and kept in open position until a maintenance operation is completed. The cowl doors are closed thereafter. The cowl doors are opened by supplying fluid to the hydraulic actuators. The cowl doors are allowed to retract at a controlled rate under a weight of the door with cowl door loads being axially compressive with respect to the hydraulic actuators. During an opening procedure, when the cowl doors are opened, hold-open rods (HORs) are manually engaged whereupon then the hydraulic actuator is slightly retracted under the cowl door loads. During this slight retraction, the cowl door loads are transferred onto the HORs thereby relieving the hydraulic actuators of the cowl door loads. With no cowl door loads on the hydraulic actuators, the slight retraction halts and the hydraulic actuators act as secondary load path members.

It has been seen recently that electro-mechanical actuators can replace existing hydraulic or hydro-mechanical actuators. Electro-mechanical actuators may be designed to power both extension and retraction operations.

A problem with electro-mechanical actuator architectures for cowl door operations is that certain frictional materials possess relatively high friction coefficients and this tends to pose challenges to certain sized gain-based design layouts.

Thus, as will be described below, an electro-mechanical actuator architecture is provided and includes friction disc-based back-to-back clutch and no-back arrangements. Where axially compressive cowl door loads are applied to friction disc packs, torque capability is proportional to the axially compressive cowl door loads, angles of skewed rollers and numbers of surfaces, skew angles of rollers can be varied. As such, each of the elements of the clutch and the no-back arrangements can be tailored to suit varied cowl door loads for different aircraft.

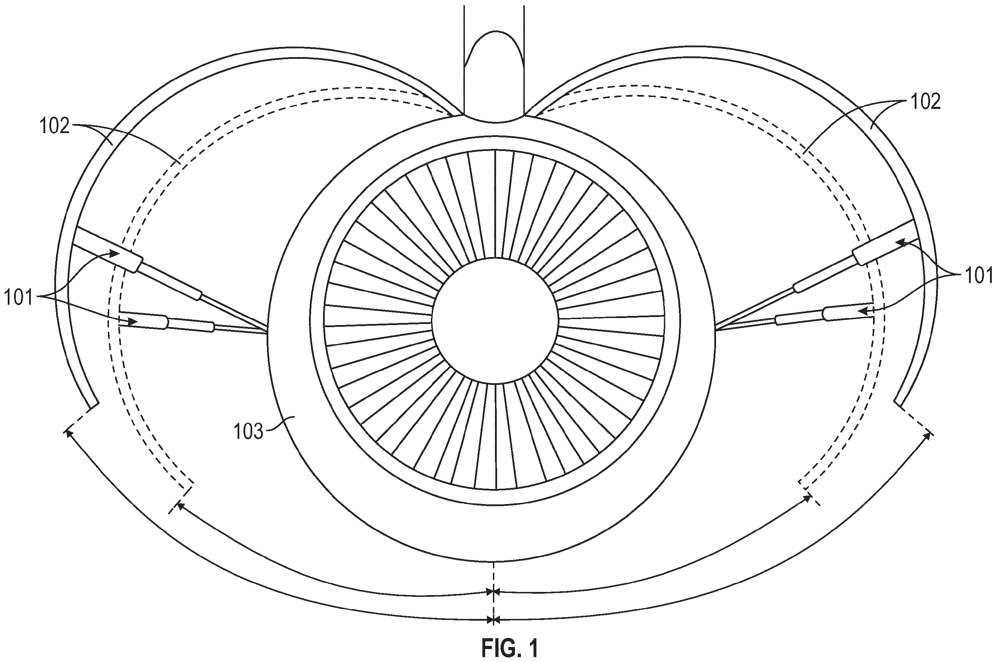

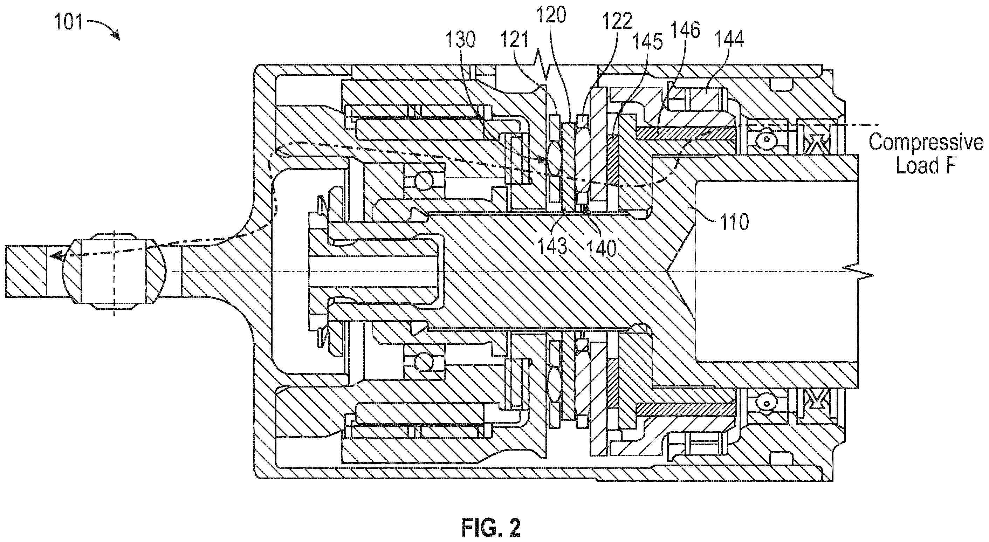

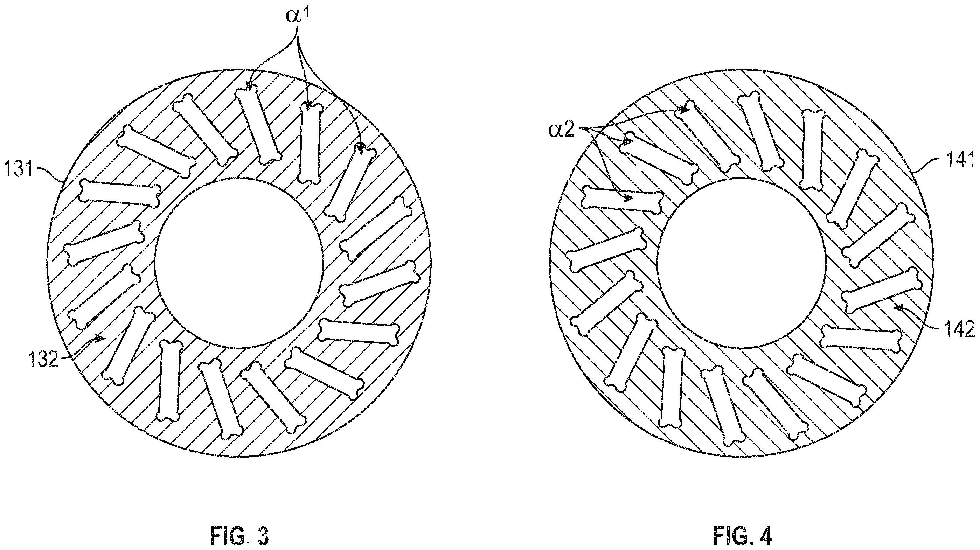

With reference to FIGS. 1-4, an electro-mechanical actuator architecture 101 is provided for use with a cowl door 102 of an aircraft engine nacelle 103, for example. As shown in FIGS. 2-4, the electro-mechanical actuator architecture 101 includes a screw shaft 110, which is connected to the cowl door 102 (see FIG. 1), a drive disc 120 that is connected to the screw shaft 110, a clutch 130 and a no-back unit 140. The clutch 130 is disposed on a first side 121 of the drive disc 120. The clutch 130 includes a first friction disc 131. The first friction disc 131 is characterized as having a first skew angle $\alpha1$. The no-back unit 140 is disposed on a second side 122 of the drive disc 120, which is opposite the first side 121. The no-back unit 140 includes a second friction disc 141. The second friction disc 141 is characterized as having a second skew angle $\alpha2$. The first skew angle $\alpha1$ can be set to be higher than the second skew angle $\alpha2$. With the first skew angle $\alpha1$ being set to be higher than the second skew angle $\alpha2$, a maximum torque capability of the electro-mechanical actuator architecture 101 is tailorable.

In accordance with embodiments, the first friction disc 131 can be provided as a clutch cage 132 in which rollers are angled relative to a radial dimension by the first skew angle $\alpha1$.

In accordance with embodiments, the no-back unit 140 includes the second friction disc 141, which can be provided as a no-back cage 142 in which rollers are angled relative to a radial dimension by the second skew angle $\alpha2$. The no-back cage 142 is adjacent to the drive disc 120. The no-back unit 140 further includes a reaction plate 143 adjacent to the no-back cage 142, a one-way clutch 144 that can be provided as a ratchet and pawl type sprag clutch and first and second needle bearings 145 and 146 interposed between the reaction plate 143 and the one-way clutch 144.

In accordance with further embodiments, the first skew angle $\alpha1$ can be greater than the second skew angle $\alpha2$ by about five degrees or more, a minimum skew angle of the second skew angle $\alpha2$ can be not less than about five degrees and a maximum skew angle of the first skew angle $\alpha1$ is about fifty-five degrees.

With the construction described above, the maximum torque capability for the electro-mechanical actuator architecture 101 can be tailored by varying the first and second skew angles α1 and α2. This can be seen in the following:

$$T = F \cdot \mu \cdot \left( \frac{D}{2} \cdot \sin\phi + \frac{2}{3} \cdot l \right) \cdot N$$

where,

$T$ = torque generated,
$F$ = axial load on the rollers,
$\mu$ = friction coefficient,
$D$ = pitch circle diameter of the rollers,
$\phi$ roller skew angle,
$l$ = roller length,
$N$ = number of roller stages.

With all other parameters remaining the same for both the clutch 130 and the no-back unit 140, a relatively high skew angle for the first skew angle α1 of the first friction disc 131 can override a relatively low skew angle for the second skew angle α1 of the second friction disc 141. Thus, the clutch 130 can effectively drive (without slipping) the no-back unit 140, which will slip continuously during cowl door retraction, to enable safe and controlled cowl door retraction. The difference between the first and second skew angles α1 and α2 can be chosen such that margin exists over respective lifespans thereof. Moreover, as the relationship holds for any particular axial load (i.e., the compressive load F of FIG. 2), the electro-mechanical actuator architecture 101 can be used in different systems.

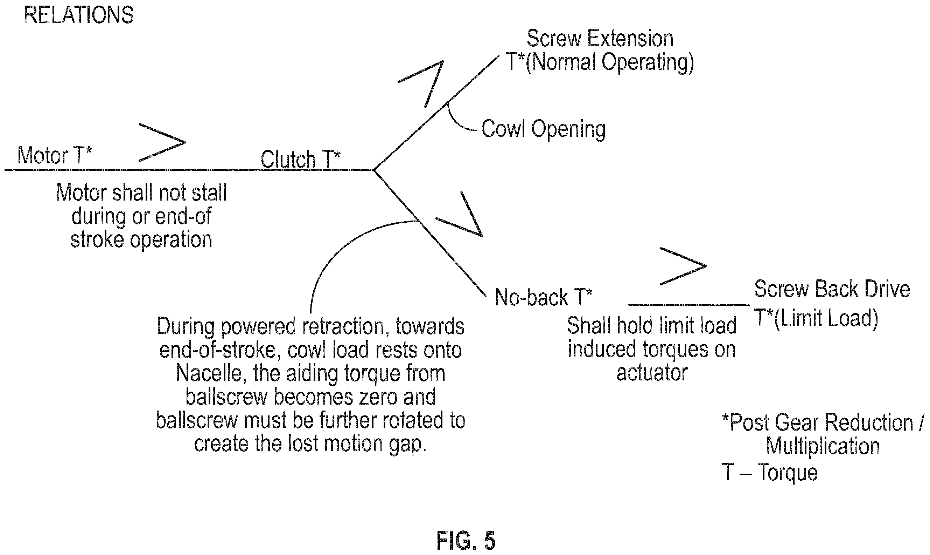

With reference to FIG. 5, during cowl door extension, the no-back unit 140 is not earthed by the one-way clutch 144 and therefore does not resist cowl door extension. During cowl door retraction, the clutch 130 transmits torque generated by a motor. In this case, the one-way clutch 144 jams and earths the no-back unit 140. As a capability of the clutch 130 is set relative to the no-back unit 140, the second friction disc 141 of the no-back unit 140 slips and allows the cowl door retraction.

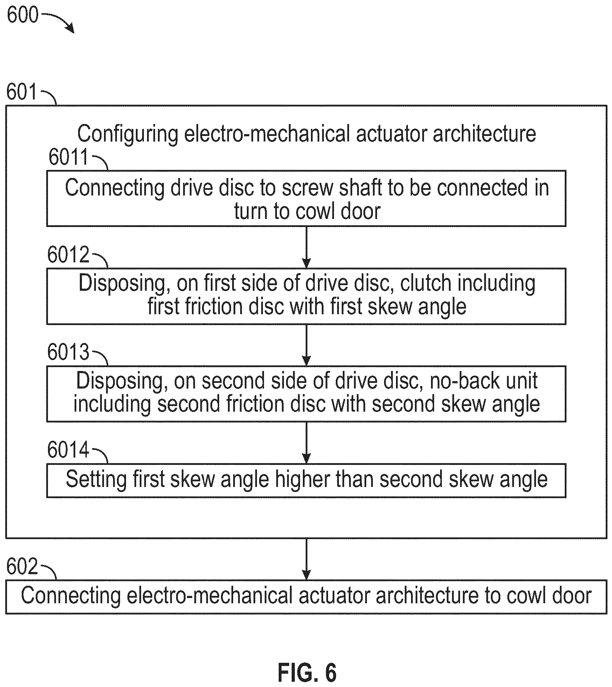

With reference to FIG. 6, a method 600 of assembling an engine nacelle, such as the aircraft engine nacelle 103 of FIG. 1, is provided. The method 600 includes configuring an electro-mechanical actuator architecture to open and close a cowl door (block 601) and connecting the electro-mechanical actuator architecture to the cowl door (block 602). The configuring of the electro-mechanical actuator architecture of block 601 includes connecting a drive disc to a screw shaft which is in turn to be connected to the cowl door (block 6011), disposing, on a first side of the drive disc, a clutch including a first friction disc with a first skew angle (block 6012), disposing, on a second side of the drive disc, which is opposite the first side, a no-back unit including a second friction disc with a second skew angle (block 6013) and setting the first skew angle higher than the second skew angle (block 6014).

In accordance with embodiments, the setting of block 6015 includes one or more of setting the first and second skew angles to tailor a maximum torque capability of the electro-mechanical actuator architecture, setting the first skew angle to be greater than the second skew angle by about five degrees or more, setting a minimum skew angle of the second skew angle to be not less than about five degrees and setting a maximum skew angle of the first skew angle to be about fifty-five degrees.

Technical effects and benefits of the present invention are the provision of an electro-mechanical actuator architecture that enables autonomy in sizing, that drives standard size inventories to cater to wide ranges of cowl door loads, that reduces development cycle times, that avoids runaway failures and that offers cost advantages.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope of the invention as defined by the claims.

While the preferred embodiments to the invention have been described, it will be understood that those skilled in the art, both now and in the future, may make various improvements and enhancements which fall within the scope of the claims which follow. These claims should be construed to maintain the proper protection for the invention first described.

**Claims**

1. An electro-mechanical actuator architecture for a cowl door of an aircraft engine nacelle, the electro-mechanical actuator architecture comprising:

a screw shaft (110);
a drive disc (120) connected to the screw shaft;
a clutch (130) disposed on a first side (121) of the drive disc, the clutch comprising a first friction disc (131) with a first skew angle; and
a no-back unit (140) disposed on a second side (122) of the drive disc, which is opposite the first side, the no-back unit comprising a second friction disc (141) with a second skew angle, the first skew angle being higher than the second skew angle.

2. The electro-mechanical actuator architecture according to claim 1, wherein the drive disc (120) is splined to the screw shaft (110).

3. The electro-mechanical actuator architecture according to claim 1 or 2, wherein the no-back unit comprises:

a no-back cage (142) adjacent to the drive disc;
a reaction plate (143) adjacent to the no-back cage;
a one-way clutch (144); and
first and second needle bearings (145, 146) interposed between the reaction plate and the one-way clutch.

4. The electro-mechanical actuator architecture according to any preceding claim, wherein the first friction disc comprises a clutch cage (131).

5. The electro-mechanical actuator architecture according to any preceding claim, wherein the first skew angle is greater than the second skew angle by about five degrees or more.

6. The electro-mechanical actuator architecture according to any preceding claim, wherein a minimum skew angle of the second skew angle is not less than about five degrees.

7. The electro-mechanical actuator architecture according to any preceding claim, wherein a maximum skew angle of the first skew angle is about fifty-five degrees.

8. An engine nacelle, comprising:

a cowl door (102); and
an electro-mechanical actuator architecture (101) as claimed in any preceding claim for opening and closing the cowl door, the screw shaft connected to the cowl door.

9. The engine nacelle according to claim 8, wherein the no-back unit does not resist cowl door extension and slips during cowl door retraction.

10. A method of assembling an engine nacelle, the method comprising:

configuring an electro-mechanical actuator architecture (101) to open and close a cowl door (102);
connecting the electro-mechanical actuator architecture to the cowl door,
the configuring of the electro-mechanical actuator architecture comprising:

connecting a drive disc (120) to a screw shaft (110);
disposing, on a first side (121) of the drive disc, a clutch (130) comprising a first friction disc (131) with a first skew angle;
disposing, on a second side (122) of the drive disc, which is opposite the first side, a no-back unit (140) comprising a second friction disc (141) with a second skew angle; and
setting the first skew angle higher than the second skew angle.

11. The method according to claim 10, wherein the setting comprises setting the first and second skew angles to tailor a maximum torque capability of the electro-mechanical actuator architecture.

12. The method according to claim 10 or 11, wherein the setting comprises setting the first skew angle to be greater than the second skew angle by about five degrees or more.

13. The method according to claim 10, 11 or 12, wherein the setting comprises setting a minimum skew angle of the second skew angle to be not less than about five degrees.

14. The method according to any of claims 10 to 13, wherein the setting comprises setting a maximum skew angle of the first skew angle to be about fifty-five degrees.

FIG. 1

**FIG. 2**

EP 4 632 212 A1

FIG. 4

FIG. 3

RELATIONS

Screw Extension
T*(Normal Operating)

Cowl Opening

Motor T*

Clutch T*

Motor shall not stall
during or end-of
stroke operation

During powered retraction, towards
end-of-stroke, cowl load rests onto
Nacelle, the aiding torque from
ballscrew becomes zero and
ballscrew must be further rotated to
create the lost motion gap.

No-back T*

Shall hold limit load
induced torques on
actuator

Screw Back Drive
T*(Limit Load)

*Post Gear Reduction /
Multiplication
T – Torque

FIG. 5

EP 4 632 212 A1

600⌐

601⌐

Configuring electro-mechanical actuator architecture

6011⌐

Connecting drive disc to screw shaft to be connected in turn to cowl door

6012⌐

Disposing, on first side of drive disc, clutch including first friction disc with first skew angle

6013⌐

Disposing, on second side of drive disc, no-back unit including second friction disc with second skew angle

6014⌐

Setting first skew angle higher than second skew angle

602⌐

Connecting electro-mechanical actuator architecture to cowl door

## FIG. 6

## EUROPEAN SEARCH REPORT

Europäisches Patentamt
European Patent Office
Office européen des brevets

**Application Number**

EP 25 16 7571

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 269 234 A1 (EATON INTELLIGENT POWER LTD [IE]) 1 November 2023 (2023-11-01) | 1,2,4-14 | INV.<br>F02K1/76 |
| A | * the whole document * <br>----- | 3 | F16D65/00<br>F16D65/02 |
| Y | US 2018/142743 A1 (PHILIPPE JEAN-LUC [FR]) 24 May 2018 (2018-05-24) <br> * the whole document * <br>----- | 1,2,4-14 | F16H25/24<br>F16H35/00 |
| A | US 2020/148330 A1 (BARGER VICTOR [US]) 14 May 2020 (2020-05-14) <br> * the whole document * <br>----- | 1,10 | |
| A | US 6 240 797 B1 (MORISHIMA SATOSHI [JP] ET AL) 5 June 2001 (2001-06-05) <br> * the whole document * <br>----- | 1,10 | |
| A | US 2020/032741 A1 (WERQUIN MICKAEL [FR] ET AL) 30 January 2020 (2020-01-30) <br> * the whole document * <br>----- | 1,10 | |

**TECHNICAL FIELDS SEARCHED (IPC)**

F16D
F02K
F16H
B64C

The present search report has been drawn up for all claims

| Place of search | Date of completion of the search | Examiner |
|---|---|---|
| Munich | 22 July 2025 | Masset, Candie |

EPO FORM 1503 03.82 (P04C01)

## ANNEX TO THE EUROPEAN SEARCH REPORT
## ON EUROPEAN PATENT APPLICATION NO.

EP 25 16 7571

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | Publication date | Patent family member(s) | | Publication date |
|---|---|---|---|---|---|
| EP 4269234 | A1 | 01-11-2023 | EP | 4269234 A1 | 01-11-2023 |
| | | | US | 2024360881 A1 | 31-10-2024 |
| US 2018142743 | A1 | 24-05-2018 | EP | 3324065 A1 | 23-05-2018 |
| | | | US | 2018142743 A1 | 24-05-2018 |
| US 2020148330 | A1 | 14-05-2020 | BR | 102015017161 A2 | 01-03-2016 |
| | | | CA | 2897717 A1 | 18-01-2016 |
| | | | CN | 105270605 A | 27-01-2016 |
| | | | US | 2016016653 A1 | 21-01-2016 |
| | | | US | 2017081017 A1 | 23-03-2017 |
| | | | US | 2020148330 A1 | 14-05-2020 |
| US 6240797 | B1 | 05-06-2001 | JP | 2000145914 A | 26-05-2000 |
| | | | US | 6240797 B1 | 05-06-2001 |
| US 2020032741 | A1 | 30-01-2020 | CA | 3055230 A1 | 13-09-2018 |
| | | | CN | 110382916 A | 25-10-2019 |
| | | | EP | 3593012 A1 | 15-01-2020 |
| | | | FR | 3063532 A1 | 07-09-2018 |
| | | | RU | 2719066 C1 | 17-04-2020 |
| | | | UA | 122381 C2 | 26-10-2020 |
| | | | US | 2020032741 A1 | 30-01-2020 |
| | | | WO | 2018162260 A1 | 13-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202411027105